# EUROPEAN PATENT SPECIFICATION

(11) **EP 1 403 101 B1**
(45) Date of publication and mention of the grant of the patent: **30.08.2006**
(21) Application number: 03021927.3
(22) Date of filing: 29.09.2003
(51) Int. Cl.: B60D 1/14, B60D 1/00, B60D 1/04

(54) **Improvements to an upper hook for a three-point hitch**
Verbesserungen an einem oberen Haken für eine Dreipunktaufhängung
Améliorations apportés au crochet supérieur pour attelage trois points

(30) Priority: 30.09.2002 IT BO20020616
(43) Date of publication of application: 31.03.2004
(73) Proprietor: CBM S.p.A., 41100 Modena (IT)
(72) Inventor: Cornia, Enrico Maria, 41100 Modena (IT)
(74) Representative: Provvisionato, Paolo

(56) References cited:
- DE-A- 3 339 846
- GB-A- 1 392 833
- US-A- 4 023 822
- US-A- 4 050 715
- US-A- 4 149 736

## Description

The present invention relates to an upper hook for a three-point hitch of the type used, albeit not exclusively, in agricultural tractors in order to hook coupling balls disposed appropriately on operating machinery. The upper hooks to which reference is made in particular comprise a main body with a hook mouth ending in a curved jaw, and a closure and locking pin, otherwise known as a shutter, mounted to move in a hole of the main body in order selectively to close at least part of the mouth in a locked configuration.

These known hooks operate by inserting a coupling ball in the mouth which is formed, for this purpose, as a seat shaped as a circular arc with an opening of an amplitude such as to facilitate this operation. The coupling ball is then held in the seat by inserting the shutter which prevents it from escaping from the mouth. Document US 4,050,715 discloses an upper hook comprising a main body with a hooking mouth ending in a curved jaw and having an inner surface which, at the location of the curved jaw, ends in a extension which extends in a rectilinear direction.

Over time, a whole range of systems have been developed to prevent the accidental unhooking of the coupling ball, and in particular to prevent the involuntary disengagement of the shutter, as disclosed for instance in Italian Utility Model No. 228875 in the name of the applicants. Two transverse pins interact respectively with the hook body and the shutter opening lever to prevent the axial thrust that the coupling ball exerts on the shutter during use from causing the shutter to open.

Although all these devices in practice appropriately prevent involuntary unhooking of the shutter in the majority of cases, it has nevertheless emerged from tests conducted by the applicants that the accidental release of the coupling ball is still a problem, albeit in a limited number of cases and in particular conditions, especially in high-power machinery where the forces at work are very high.

The object of the present invention is to provide an upper hook for a three-point hitch which also remedies these remaining causes of unhooking of the hook and coupling ball, by means of an upper hook for a three-point hitch which is highly reliable, simple to produce, easy to use and very economic.

The practical tests conducted by the applicants have shown that the shutter behaves anomalously when it is subject to high stresses transmitted from the coupling ball. In particular conditions, the forces in the direction substantially transverse to the direction of sliding of the shutter are so high as to cause crushing and deformation of a known shutter, conventionally made from surface case-hardened cemented steel. These shutters have a relatively "soft" core surrounded by a very rigid and thin surface shell. When the surface shell is no longer able to withstand the pressure exerted on it by the coupling ball, it rapidly collapses, so that the shutter is crushed and partially opens the mouth of the hook to an extent enabling the involuntary release of the coupling ball.

Alongside this primary cause of malfunction, the applicants have identified other causes which increase the possibility of unhooking. The seat for the coupling ball provided at the base of the hook mouth in particular comprises a track which normally ends on the curved jaw of the hook, intersecting a highly inwardly inclined surface of the mouth facilitating the insertion of the coupling ball. Consequently, the mouth surface in contact with the outer surface of the coupling ball decreases in the area of the hook jaw. The frictional force that the mouth exerts on the coupling ball is therefore very small. However, the pressures in this area are very high as they are localised, and tend to bend a curved jaw which is not thick enough, thereby allowing the coupling ball to escape.

In order to remedy the above-mentioned causes of unhooking and to achieve the above-mentioned objects, the invention relates to an upper hook for a three-point hitch of the type set out in the preamble of this description, in which the shutter is made from quenched and tempered steel surface hardened to achieve a predetermined degree of hardness. In a preferred embodiment, only a zone of the surface adapted to come into contact, in the locked configuration, with a coupling ball housed in the mouth is surface hardened.

According to a further characteristic feature, the main body of the hook comprises at least one entry surface which facilitates the entry of the coupling ball into the mouth. At least one entry surface is provided at the location of at least one of the ends of the mouth and is oriented so as to allow the coupling ball to slide towards the interior of the mouth. In a variant, the entry surfaces are provided on both ends of the mouth.

According to a further characteristic feature, the mouth has an inner surface following a circular arc and ending at the location of the curved jaw with an extension surface. The extension surface preferably has a rectilinear directrix and intersects an entry surface provided on the curved jaw. The inner surface of the mouth is provided with a groove which reproduces the profile of the coupling ball. The groove intersects the entry surface only in the extension surface section. In this way, the depth of the groove is kept constant almost up to the end of the mouth, maintaining a wide surface of contact with the coupling ball in this area as well.

The longitudinal axis of the shutter is preferably inclined with respect to the rectilinear direction in which the inner extension surface of the mouth extends by an angle of 50° or less, preferably 38°. This has the effect of wedging the coupling ball against the shutter and the extension surface section of the mouth. This effect entails a smaller component of forces able to bend the shutter and the curved jaw and greater components of forces of friction able to maintain the coupling ball with respect to those recorded for higher angles.

According to a particularly advantageous characteristic feature, the surfaces of the end portion of the curved jaw external to the mouth are all convex, with a concavity facing the interior of the hook. This arrangement produces a useful thickening and strengthening of the curved jaw which is particularly adapted to resist bending.

Further characteristic features and advantages are set out in the following description made with reference to the accompanying drawings, given purely by way of non-limiting example, in which:
- Fig. 1 is an exploded perspective view of an upper hook of a three-point hitch of the present invention;
- Fig. 2 is a side view of the main body of the hook of Fig.1;
- Fig. 3 is a cross-section through the main body along the line III-III of Fig. 2, on an enlarged scale.

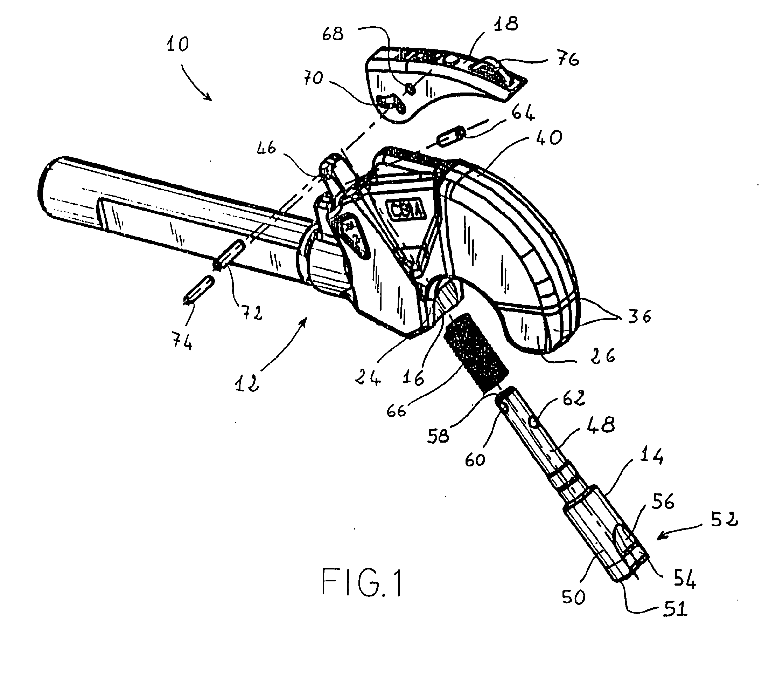

With reference to Fig. 1, a hook 10 comprises a main body 12, made for instance by casting, moulding or welding, with a shutter 14 sliding within a hole 16 provided in the main body 12, and a lever 18 mounted to oscillate on the main body 12 and coupled to the shutter 14 in order to move it in translation selectively, in operation, from a position locking to a position unlocking a coupling ball inserted in the hook 10.

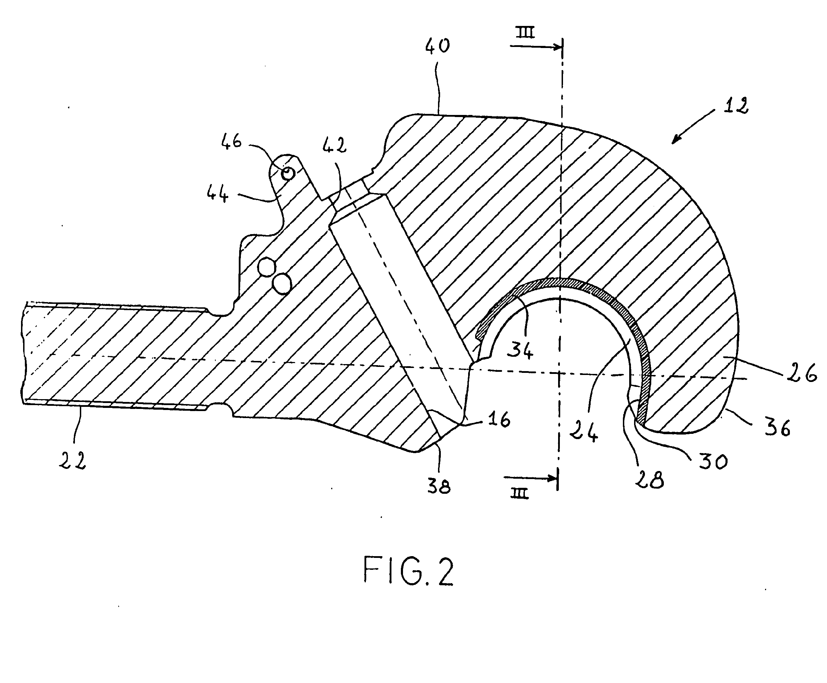

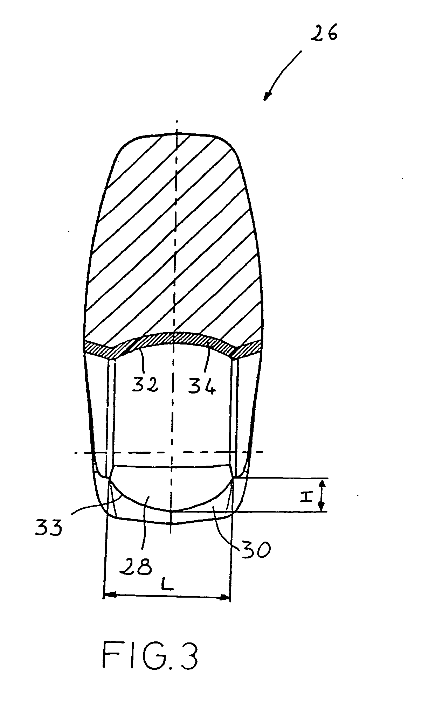

The main body 12 (Figs. 2 and 3) comprises a threaded rod 22 for connection, for instance, to the upper bar of a three-point hitch, and a mouth 24 adapted to engage coupling balls of standard type commonly used to hitch agricultural machinery. The mouth 24 is formed as a chamber in the main body 12 shaped as a circular arc with an opening of less than 180°. The main body 12 comprises, at the end opposite the threaded rod 22, a jaw 26 at the location of which the mouth 24 comprises an extension 28, preferably in the form of a surface extending in a rectilinear direction tangential to the circular arc. The extension 28 ends, preferably but in a non-limiting manner, by intersecting one or more surfaces 30 of the jaw 26 oriented towards the interior of the mouth 24 so as to provide an entry for the insertion of a coupling ball. The surfaces 30 are preferably, but in a non-limiting manner, convex or plane. The inner surface of the mouth 24 is provided with a concave track or groove 32 which reproduces the external profile of a coupling ball. The intersection of the track 32 and the surfaces 30 on the jaw 26 defines a gradual reduction of the depth of the track 32 until it is completely cancelled out in a section contained in the extension 28 and of a length comparable with the maximum depth of the track 32. The result of the intersection of the track 32 and the surfaces 30 is a chamfer 33 (see Fig. 3) of arcuate shape in which the height H of the peak is smaller than the width L of the arc.

The track 32 comprises a section 34 which preferably extends over the majority of the track 32 and is hardened, for instance surface-hardened using an induction method, so as preferably to obtain a surface hardness value in the range 50-55 HRC and a depth preferably of no less than 3 mm.

The jaw 26 has convex surfaces 36 external to the mouth 24 with a concavity facing the interior of the main body 12 (Fig. 1), so that the resulting section is that with the maximum area.

In addition or as an alternative to the surfaces 30, entry surfaces 38 may be provided on the jaw 26, for instance at the end of the mouth 24 opposite the jaw 26.

The shutter 14 is made from quenched and tempered steel and has a portion of smaller diameter 48 and a portion of larger diameter 50. The smaller diameter portion 48 is inserted in a sliding manner in the hole 16, with the larger diameter portion 50 facing the mouth 24. The lateral surface of the larger diameter portion 50 is provided with a recess 52 which preferably starts from the base 51 of the larger diameter portion 50, extends in the longitudinal direction of the shutter 14 into a cylindrical sector surface 54 and ends in a spherical sector recess 56 linked to the cylindrical sector surface 54 so as to come into abutment on the side of the coupling ball when it is in the locked position. The shutter 14 is preferably, but in a non-limiting manner, hardened only at the location of the recess 52 so that a surface hardness preferably in the range of 55 to 60 HRC is achieved there. The hardening treatment may be applied to harden only a surface layer of the material, for instance by means of an induction method.

The hole 16 is preferably provided at the end of the mouth 24 opposite the jaw 26 and is such that the longitudinal axis of the shutter 14, inserted therein in a sliding manner, is inclined by an acute angle with respect to the extension 28. Preferably, although in a non-limiting manner, this angle is 50° or less and is preferably 38°. The hole 16 passes through the main body 12 until it reaches a back 40 opposite the mouth 24. At the back 40, the hole 16 has a restriction 42 which has a diameter sufficient for the passage of the smaller diameter portion 48 of the shutter 14 and which provides an abutment for one end of a spring 66. The opposite end of the spring 66 abuts against the larger diameter portion 50 so that the resultant thrust holds the larger diameter portion 50 in the locking configuration in which at least a portion thereof at least partially closes off the inlet of the mouth 24. The shutter 14 is prevented from slipping completely out of the hole 16 under the action of the thrust of the spring 66 by means of a pin 64 inserted in a projecting manner in a hole 62 provided radially in the vicinity of the terminal end 58 of the smaller diameter portion 48 which abuts on the back 40 thereby limiting the stroke of the shutter 14 from the locked to the unlocked position. Preferably, but in a non-limiting manner, the pin 64 is also made from surface-hardened quenched and tempered steel.

A boss 44 is provided on the back 40 in the immediate vicinity of the outlet of the hole 16. A hole 46 with an axis at right angles to the axis of the hole 16 is provided at the apex of the boss 44. The lever 18 has a slot 70 in the shape of an upturned L, of the type known from the Italian Utility Model IT228875 discussed in the preamble, in which a pin 74 freely slides and can also be inserted in the hole 46 to provide a connection enabling simultaneous rotation and relative translation between the lever 18 and the main body 12. The lever 18 is also provided with a hole 68 in which a pin 72 is inserted and provides a rotary coupling with the shutter 14 when it is inserted into a through hole 60 provided radially on the smaller diameter portion 48 close to the hole 62. The lever 18 is also provided with an eyelet 76 or like arrangement adapted to hook a tie, for instance a chain or cable, enabling the actuation of the hook 10 from a distance, for instance from the driving cabin of the tractor.

In order to hook a coupling ball provided at a connection point of an agricultural machine, the operator raises the lever 18 from the back 40 of the main body 12 by rotating it and moving it in translation about the pin 74. This movement causes the shutter 14 to slide in the hole 16 to the unlocking position in which its larger diameter portion 50 is retracted into the hole 16 by an amount sufficient to enable the coupling ball to be inserted into the mouth 24.

The hook 10 may also be positioned with one of the entry surfaces 38 or 30 bearing on the coupling ball. The operator then keeps the lever 18 raised, for instance by means of a chain, and by actuating the hook 10 from the driving cabin, causes the coupling ball to enter the mouth 24 and thus actual hooking.

Once the coupling ball is in position in the mouth 24, it is locked by releasing the lever 18. The thrust of the spring 66 is in practice sufficient to cause the shutter 14 to move in translation with a stroke defined by the abutment of the pin 64 on the back 40 and sufficient at least partially to close the mouth 24 with the larger diameter portion 50. The shutter 14 in particular slides until the spherical sector portion is in abutment on the coupling ball or the pin 64 contacts the back 40 of the main body 12.

During working of the agricultural machinery hooked to the three-point hitch, the forces that the coupling ball exerts on the mouth 24 are well absorbed by the hardened track 32 so that it is not deformed, while those in all the other directions cause the wedging of the coupling ball between the shutter 14 and the extension 28 of the mouth 24. In this case the inclination of the longitudinal axis of the shutter with respect to the extension 28 makes it possible to achieve a smaller component of bending forces which, in combination with the material and treatment of the shutter and the solid section of the jaw, completely cancels out the risk of deformation.

The particular arrangement that the track 32 has at the location of the extension 28 offers the maximum contact surface with the coupling ball, ensuring a high retaining force at the location of the jaw 26 as well, which is considered to be a possible point of escape.

## Claims

1. An upper hook for a three-point hitch comprising a main body (12) with a hooking mouth (24) ending in a curved jaw (26), a shutter (14) being mounted to move in a hole (16) of the main body (12) in order selectively to close at least part of the mouth (24) in a locked configuration, **characterised in that** the shutter (14) is made from quenched and tempered steel surface-hardened in at least a zone (54, 56) adapted to come into contact, in the locked configuration, with a coupling ball housed in the mouth (24).

2. An upper hook for a three-point hitch as claimed in claim 1, **characterised in that** at least the one surface-hardened zone (54, 56) of the shutter (14) has a surface hardness in the range of 55-60 HRC.

3. An upper hook for a three-point hitch as claimed in claim 1, **characterised in that** the mouth (24) has an inner surface (28, 34) with at least one hardened zone corresponding to at least the majority of its extension (34).

4. An upper hook for a three-point hitch as claimed in claim 3, **characterised in that** at least the one hardened zone has a surface hardness in the range of 55-55 HRC and a depth of no less than 3 mm.

5. An upper hook for a three-point hitch as claimed in any one of the preceding claims, **characterised in that** the mouth (24) has an inner surface which, at the location of the curved jaw (26), ends in an extension (28) extending in a rectilinear direction, the longitudinal axis of the shutter (14) being inclined with respect to the direction of the extension (28) by an angle of 50° or less.

6. An upper hook for a three-point hitch as claimed in claim 5, **characterised in that** the angle is 38°.

7. An upper hook for a three-point hitch according to claim 1, **characterised in that** the mouth (24) has an inner surface which, at the location of the curved jaw (26) ends in an extension (28) which extends in a rectilinear direction, the curved jaw (26) having an end portion with the surfaces (36) external to the mouth all being convex, with a concavity facing the interior of the hook (10).

8. An upper hook for a three-point hitch as claimed in claim 7, **characterised in that** the main body comprises at least one entry surface (30, 38) at the location of at least one of the ends of the mouth oriented so as to facilitate the sliding of a coupling ball towards the interior of the mouth (24) .

9. An upper hook for a three-point hitch as claimed in claim 8, **characterised in that** the main body (12) has at least one entry surface (30, 38) at both ends of the mouth (24).

10. An upper hook for a three-point hitch as claimed in claim 8, comprising a groove (32) which extends along the inner surface of the mouth (24) and intersects at least one entry surface (30, 38) provided on the curved jaw (26), **characterised in that** the intersection is completely contained in the extension (28) of the mouth (24) and the chamfer that results has the shape of an arc with a peak of height (H) lower than the width (L).

## Patentansprüche

1. Oberer Haken für eine Dreipunktaufhängung, der einen Hauptkörper (12) mit einem Hakenmaul (24) aufweist, das in einer gebogenen Klaue (26) endet, wobei ein Schließer (14) montiert ist, um sich in eine Öffnung (16) des Hauptkörpers (12) zu bewegen, um selektiv mindestens einen Teil des Mauls (24) in einer verriegelten Konfiguration zu schließen, **dadurch gekennzeichnet, dass** der Schließer (14) aus abgeschrecktem und vergütetem Stahl, der in mindestens einer Zone (54, 56) oberflächengehärtet ist, besteht, der in der verriegelten Konfiguration mit einem Koppelball, der in dem Maul (24) untergebracht ist, in Berührung kommen kann.

2. Oberer Haken für eine Dreipunktaufhängung nach Anspruch 1, **dadurch gekennzeichnet, dass** mindestens die eine oberflächengehärtete Zone (54, 56) des Schließers (14) eine Oberflächenhärte in dem Bereich von 55-60 HRC hat.

3. Oberer Haken für eine Dreipunktaufhängung nach Anspruch 1, **dadurch gekennzeichnet, dass** das Maul (24) eine Innenfläche (28, 34) mit mindestens einer gehärteten Zone hat, die mindestens der Mehrheit ihrer Ausdehnung 34) entspricht.

4. Oberer Haken für eine Dreipunktaufhängung nach Anspruch 3, **dadurch gekennzeichnet, dass** die mindestens eine gehärtete Zone eine Oberflächenhärte in dem Bereich 55-55 HRC und eine Tiefe von nicht weniger als 3 mm hat.

5. Oberer Haken für eine Dreipunktaufhängung nach einem der vorhergehenden Ansprüche, **dadurch gekennzeichnet, dass** das Maul (24) eine Innenfläche hat, die an der Stelle der gebogenen Klaue (26) in einer Erweiterung (28) endet, die sich in eine geradlinige Richtung erstreckt, wobei die Längsachse des Schließers (14) zu der Richtung der Erweiterung (28) um einen Winkel von 50° oder weniger geneigt ist.

6. Oberer Haken für eine Dreipunktaufhängung nach Anspruch 5, **dadurch gekennzeichnet, dass** der Winkel 38° beträgt.

7. Oberer Haken für eine Dreipunktaufhängung nach Anspruch 1, **dadurch gekennzeichnet, dass** das Maul (24) eine Innenfläche hat, die an der Stelle der gebogenen Klaue (26) in einer Erweiterung (28) endet, die sich in einer geradlinigen Richtung erstreckt, wobei die gebogene Klaue (26) einen Endabschnitt mit Flächen (36) hat, die außerhalb des Mauls alle konvex sind, mit einer Konkavität, die zum Inneren des Hakens (10) zeigt.

8. Oberer Haken für eine Dreipunktaufhängung nach Anspruch 7, **dadurch gekennzeichnet, dass** der Hauptkörper mindestens eine Eingangsfläche (30, 38) an der Stelle mindestens eines der Enden des Mauls aufweist, die so ausgerichtet ist, dass sie das Gleiten des Koppelballs zum Inneren des Mauls (24) erleichtert.

9. Oberer Haken für eine Dreipunktaufhängung nach Anspruch 8, **dadurch gekennzeichnet, dass** der Hauptkörper (12) mindestens eine Eingangsfläche (30, 38) an beiden Enden des Mauls (24) hat.

10. Oberer Haken für eine Dreipunktaufhängung nach Anspruch 8, der eine Hohlkehle (32) aufweist, die sich entlang der Innenfläche des Mauls (24) erstreckt und mindestens eine Eingangsfläche (30, 38), die auf der gebogenen Klaue (26) vorgesehen ist, schneidet, **dadurch gekennzeichnet, dass** die Schnittstelle völlig in der Erweiterung (28) des Mauls (24) enthalten ist, und dass die Abfasung, die daraus resultiert, die Form eines Bogens mit einem Höhengipfel (H) niedriger als die Breite (L) hat.

## Revendications

1. Crochet supérieur pour un attelage à trois points comprenant un corps principal (12) avec une bouche d'accrochage (24) se terminant par une mâchoire courbe (26), un volet obturateur(14) étant monté de façon à se déplacer dans un orifice (16) du corps principal (12) afin de fermer sélectivement au moins une partie de la bouche (24) dans une configuration verrouillée, **caractérisé en ce que** le volet obturateur (14) est réalisé à partir d'une surface durcie en acier trempé dans au moins une zone (54, 56) adaptée pour venir en contact, dans la configuration verrouillée, avec une boule d'attelage ménagée dans la bouche (24).

2. Crochet supérieur pour un attelage à trois points selon la revendication 1, **caractérisé en ce que** au moins la zone durcie en surface (54,56) du volet (14) a une dureté de surface dans la gamme comprise entre 55 et 60 HRC.

3. Crochet supérieur pour un attelage à trois points selon la revendication 1, **caractérisé en ce que** la bouche (24) a une surface interne (28, 34) avec au moins une zone durcie correspondant à au moins la majorité de son extension (34).

4. Crochet supérieur pour un attelage à trois points selon la revendication 3, **caractérisé en ce qu'**au moins la zone durcie a une dureté de surface dans la gamme comprise entre 55-55 HRC et une profondeur d'au moins 3 mm.

5. Crochet supérieur pour un attelage à trois points selon l'une quelconque des revendications précédentes, **caractérisé en ce que** la bouche (24) a une surface interne qui, à l'endroit de la mâchoire courbe (26), se termine par une extension (28) s'étendant dans une direction rectiligne, l'axe longitudinal du volet obturateur (14) étant incliné par rapport à la direction de l'extension (28) par un angle de 50° ou moins.

6. Crochet supérieur pour un attelage à trois points selon la revendication 5, **caractérisé en ce que** l'angle est de 38°.

7. Crochet supérieur pour un attelage à trois points selon la revendication 1, **caractérisé en ce que** la bouche (24) a une surface interne qui, à l'endroit de la mâchoire courbe (26), se termine par une extension (28) qui s'étend dans une direction rectiligne, la mâchoire courbe (26) ayant une portion extrême avec les surfaces (36) externes à la bouche qui sont toutes convexes, avec une concavité faisant face à l'intérieur du crochet (10).

8. Crochet supérieur pour un attelage à trois points selon la revendication 7, **caractérisé en ce que** le corps principal comprend au moins une surface d'entrée (30, 38) à l'endroit d'au moins une des extrémités de la bouche orientée de façon à faciliter le glissement de la boule d'attelage vers l'intérieur de la bouche (24).

9. Crochet supérieur pour un attelage à trois points selon la revendication 8, **caractérisé en ce que** le corps principal (12) a au moins une surface d'entrée (30, 38) aux deux extrémités de la bouche (24).

10. Crochet supérieur pour un attelage à trois points selon la revendication 8, comprenant une cannelure (32) qui s'étend le long de la surface interne de la bouche (24) et coupe au moins une surface d'entrée (30, 38) ménagée sur la mâchoire courbe (26), **caractérisé en ce que** l'intersection est totalement contenue dans l'extension (28) de la bouche (24) et le chanfrein qui s'ensuit a la forme d'un arc avec un pic de hauteur (H) inférieur à la largeur (L).
